# EUROPEAN PATENT APPLICATION

(11) **EP 4 764 883 A1**
(43) Date of publication of application: **24.06.2026**
(21) Application number: 24221456.7
(22) Date of filing: 19.12.2024
(51) Int. Cl.: G06F 16/245, G06N 3/00

(54) **NEURO-SYNAPTIC PROCESSING CIRCUITRY**

(71) Applicant: Stichting IMEC Nederland, 5656 AE Eindhoven (NL)
(72) Inventor: Upadhyay, Pankaj, 5656 AE Eindhoven (NL); Vadivel, Kanishkan, 5656 AE Eindhoven (NL)
(74) Representative: Ipsilon Belgium

(57) **Abstract**

A neuro-synaptic processing circuitry (1) for performing event-based neuro-synaptic operations based on synaptic weights and neuron states, the circuitry comprising: a data memory (100) configured to store the synaptic weights; one or more neuron processing elements, NPEs, (121, 122, 123, 124) configurable to execute NPE instructions (120) for performing the event-based neuro-synaptic operations; a controller (130) configured to determine the event-based neuro-synaptic operations in function of one or more neuro-synaptic events; wherein the controller is further configured to generate the NPE instructions from the event-based neuro-synaptic operations; and weight-evaluating means configured to determine if one or more of the synaptic weights have a value of zero; and wherein, if the weight-evaluating means determines one or more of the synaptic weights having a value of zero, the NPEs are configured to omit executing one or more of the NPE instructions involving the one or more of the synaptic weights having a value of zero.

## Description

### Technical field

The present invention generally relates to a neuro-synaptic processing circuitry for performing event-based neuro-synaptic; and a neuro-synaptic multicore processing circuitry.

### Background

Neuromorphic computing comprises performing neuro-synaptic operations according to certain arrangements of neurons and synaptic edges of an artificial neural network, ANN, e.g. a convolutional neural network, CNN, or a spiking neural network, SNN. Such neuro-synaptic operations may be performed by one or more digital neuromorphic processors, also referred to as neuromorphic processor cores or neuro-synaptic processing circuitries.

A neuromorphic processor may deploy an event-based neural network operation, wherein a neuro-synaptic operation is triggered by an event. Neuro-synaptic operations are then triggered by incoming events. By only performing neuro-synaptic operations upon receiving an event, some calculations in a neural network may be skipped.

A number of neurons in a neural network may vary between a few tens of neurons to a few millions of neurons or even more. A number of synaptic edges in a neural network may be significantly larger than the number of neurons. This depends on how strongly neurons are interconnected. A complexity of a neural network may, for example, depend on a task complexity and/or a type of input data. For example, images, or other sensory data, such as Light Detection and Ranging, LiDAR, point clouds, usually require processing by a neural network having a considerable number of neurons and synaptic edges due to a high dimensionality of the input data.

With respect to memory usage, for each neuron in a neural network, at least a neuron state needs to be stored. Additionally, a synaptic weight needs to be stored for each synaptic edge in the neural network. Loading and storing neuron states and synaptic weights from and to memory may also introduce delays during operation.

With respect to computational resources, input data needs to be processed across the different layers and neurons of the neural network when performing training or inference. During training, a large training dataset needs to be processed, including many iterations over the neural network. As a result, many neuro-synaptic operations may need to be executed.

Deploying a neural network may thus be highly computation-intensive as well as memory-intensive. Due to the many necessary computations and/or high storage requirements, a neuromorphic processor may require a long time to perform a task.

This may, for example, be especially challenging in real-time applications, where latency requirements are critical. In real-time applications, edge computing may be performed to avoid communication overhead resulting from communication with a centralised computational resource located elsewhere. Edge devices, however, are usually subject to limited computational resources as well as a limited memory allocation. As a result, an edge device may struggle to process data while meeting latency requirements.

Further, there is a trade-off between flexibility and efficiency in neuromorphic computing. The more flexible a digital neuromorphic processor, the more types of neural networks it can simulate. This flexibility comes at the expense of efficiency, which may be expressed in chip area or power consumption.

### Summary

There is a need for a neuro-synaptic processing circuitry that is able to perform tasks in a short execution time.

There is a need for a neuro-synaptic processing circuitry that makes efficient use of available memory.

There is a need for a neuro-synaptic processing circuitry that introduces limited memory overhead.

There is a need for a neuro-synaptic processing circuitry that is efficient in terms of chip area and/or power consumption.

There is a need for an neuro-synaptic processing circuitry that is flexible to perform a variety of neuromorphic configurations while remaining efficient.

The present invention aims to alleviate at least some of the above mentioned obstacles.

The scope of protection sought for various embodiments of the invention is set out by the independent claims.

The embodiments and features described in this specification that do not fall within the scope of the independent claims, if any, are to be interpreted as examples useful for understanding various embodiments of the invention.

According to a first aspect, there is provided a neuro-synaptic processing circuitry for performing event-based neuro-synaptic operations based on synaptic weights and neuron states, the circuitry comprising:
- a data memory configured to store the synaptic weights;
- one or more neuron processing elements, NPEs, configurable to execute NPE instructions for performing the event-based neuro-synaptic operations;
- a controller configured to determine the event-based neuro-synaptic operations in function of one or more neuro-synaptic events; wherein the controller is further configured to generate the NPE instructions from the event-based neuro-synaptic operations; and
- weight-evaluating means configured to determine if one or more of the synaptic weights have a value of zero; and
wherein, if the weight-evaluating means determines one or more of the synaptic weights having a value of zero, the NPEs are configured to omit executing one or more of the NPE instructions involving the one or more of the synaptic weights having a value of zero.

The neuro-synaptic processing circuitry according to the present disclosure exploits a sparsity of synaptic weights. By skipping computations involving synaptic weights that are zero anyways, and will thus result in zero contributions, the neuro-synaptic processing circuitry saves time and is able to perform a given task more quickly. As a result, power consumption is saved by avoiding performing needless computations, i.e. computations which are time-consuming while being irrelevant. For example, computations involving a zero may have a result that is already known without having to waste power on the computation. In addition, implementing the omitting of zero-weight operations in a neuro-synaptic processing circuitry according to the present disclosure does not impact a flexibility of the neuro-synaptic processing circuitry.

It is noted that a neuro-synaptic processing circuitry according to the first aspect may handle input data that may be either sparse data or dense data. The neuro-processing circuitry as such provides a large flexibility and may not be restricted to only optimise handling of around a particular percentage of data density.

It is further noted that execution of NPE instructions involving one or more of the synaptic weights having a value of zero is omitted. In other words, one, some, or all of the synaptic weights having a value of zero may be omitted during execution. It is not required to necessarily omit all NPE instructions involving zero-weights. A technical effect of saving power and computational resources by avoiding needless computations is already achieved even when not all zero-weights are skipped when executing the NPE instructions. Notwithstanding, according to example embodiments, if one or more of the synaptic weights have a value of zero, the NPEs may be configured to omit executing any NPE instructions involving the one or more of the synaptic weights having a value of zero. In other words, if one or more of the synaptic weights have a value of zero, the NPEs may be configured to exclusively execute NPE instructions not involving the one or more of the synaptic weights having a value of zero.

To implement the omission of execution of one or more NPE instructions involving one or more synaptic weights, weight-evaluating means are provided to detect a presence of zero weights. In other words, the weight-evaluating means is configured to evaluate if one or more of the synaptic weights have a value of zero. It will be apparent that the weight-evaluating means may be implemented in a variety of ways.

The weight-evaluating means may, for example, comprise one or more of the one or more NPEs and therefore, one or more of the one or more NPEs may be configured to determine if one or more of the synaptic weights have a value of zero. Alternatively, one or more of the one or more NPEs may comprise weight-evaluating means.

Alternatively, or additionally, the weight-evaluating means may comprise the controller and therefore, the controller may be configured to determine if one or more of the synaptic weights have a value of zero. Alternatively, the controller may comprise weight-evaluating means, thereby configuring the controller to be configured to determine if one or more of the synaptic weights have a value of zero.

Alternatively, or additionally, the event-based neuro-synaptic processing circuitry may further comprise a designated sub-circuitry for performing the determining if one or more of the synaptic weights have a value of zero, wherein the designated sub-circuitry is configured to determine if one or more of the synaptic weights have a value of zero. Alternatively, or additionally, the weight-evaluating means may comprise other components of the neuro-synaptic processing circuitry. Alternatively, or additionally, such a verification can be performed off-line, i.e. before loading the synaptic weights into the neuro-synaptic processing circuitry.

Further, because the neuro-synaptic processing circuitry is event-based, the circuitry may skip some computations and may be efficient in terms of power consumption. Despite of time-criticality, data may not come in as a continuous data flow, but rather in bursts. Computations only need to be quickly performed when data comes in, instead of continuously over time.

Not all neurons may need to be continuously updated. This can be exploited by an event-based, i.e. event-driven, neural network scheme, wherein a neuro-synaptic operation is triggered by an event, for example instead of a regular predefined time interval. A neuro-synaptic operation is thus only performed in response to an incoming event. In other words, in absence of any incoming event, a neuron may remain idle. The neuron will only perform the neuro-synaptic operation after an input event is provided to the neuron.

Generating an event by performing a neuro-synaptic operation may also be referred to as firing. An event may, for example, be generated automatically upon performing a neuro-synaptic operation. Alternatively, generating an event by a neuron may be done when a predefined condition is met. For example, in a spiking neural network, SNN, such a predefined condition may be based on an accumulation of input data over a certain time interval. An accumulated value may, for example, comprise a weighted sum of past input data values received during the time interval. The accumulated value may be further processed by a function, e.g. a non-linear function such as, for example, an exponential function, before being checked against the predefined condition. A neuron may be configured to fire when such an accumulated value reaches a predefined threshold. In a spiking neural network, SNN, firing may also be referred to as spiking.

According to further example embodiments, a neuro-synaptic event comprises:
- an event generated by one of the one or more NPEs; or
- an event generated by a connected NPE comprised in a connected neuro-synaptic processing circuitry coupled to the neuro-synaptic processing circuitry.

According to further example embodiments, the controller is further configured to execute program code to perform the event-based neuro-synaptic operations; and the controller is further configured to determine the NPE instructions in function of the program code.

The program code may be converted by the controller into one or more micro-code kernels comprising the NPE instructions.

According to further example embodiments, the NPE instructions further comprise a load instruction for loading the synaptic weights from the data memory into the NPEs; and, if the weight-evaluating means determines one or more of the synaptic weights having a value of zero, the NPEs are further configured to omit loading at least one of the one or more synaptic weights having a value of zero from the data memory into the NPEs.

A load instruction may be part of an instruction set architecture, ISA, e.g. a reduced instruction set computer, RISC, or a complex instruction set computer, CISC. A load instruction is an NPE instruction to load one or more synaptic weights from the data memory into an NPE.

By omitting loading of one or more zero-weights into the NPEs, NPE instructions involving said one or more zero-weights are omitted as a result. By already suppressing or intercepting zero-weights during the loading, further needless processing is avoided, thereby increasing efficiency.

The omitting of the loading of at least one of the one or more synaptic weights may be orchestrated by the controller. This may for example be done by checking for zero-weights before providing a loading instruction to an NPE.

The omitting of the loading of at least one of the one or more synaptic weights may be entirely handled by the NPEs themselves. For example, the NPEs may be configured to provide the weight-evaluating means and the NPEs may be configured to determine if one or more of the synaptic weights have a value of zero before executing a load instruction.

The omitting of the loading of at least one of the one or more synaptic weights may be orchestrated by a designated evaluation sub-circuitry in communication with the NPEs. Such a designated evaluation sub-circuitry may then communicate to the NPEs when to skip a load instruction.

One or more of the above example embodiments may be combined.

According to further example embodiments, the NPEs may be configured to execute NPE instructions in parallel according to a single instruction, multiple data, SIMD, instruction set. In an SIMD instruction set, each active NPE executes a same or single instruction in parallel and independently from other NPEs.

According to further example embodiments, the neuro-synaptic processing circuitry further comprises a separate neuron data memory configured to store the neuron states.

The data memory and the neuron data memory may be organised in a different way. By storing the synaptic weights and the neuron states in separate memories independent from each other, storage and manipulation of synaptic weights may be optimised for omitting loading of synaptic weights having a value of zero from the data memory into the NPEs.

Alternatively, according to example embodiments, the data memory may be further configured to store the neuron states. The neuron states and the synaptic weights can thus also be stored together in the data memory.

According to further example embodiments, the data memory further comprises a memory port for loading the synaptic weights from the data memory; the memory port is further configured to load the neuron states from the neuron data memory into the NPEs; and the data memory and the neuron data memory are configured to share the memory port.

A memory port is a component of a data memory that is configured to hold one or more synaptic weights that have been requested from the data memory. The memory port allows accessing one or more synaptic weights. The memory port comprises means for reading out one or more synaptic weights. The memory port is connected to the NPEs to allow the loading into the NPEs.

When the data memory and the neuron data memory are configured to share the memory port, this means that the synaptic weights and the neuron states can both be held by the memory port. The NPEs can obtain synaptic weights or neuron states from the same memory port. Contrarily to providing a separate memory port for the neuron data memory, this allows saving chip area. Sharing the memory port results in that the memory port cannot be used simultaneously by both the data memory and the neuron data memory. In other words, the memory port can at all times only comprise either one or more synaptic weights or one or more neuron states.

According to further example embodiments, the load instruction may be further configured for loading the neuron states from the neuron data memory into the NPEs

According to further example embodiments, the neuro-synaptic processing circuitry is further configured to implement a memory arbitration scheme between the data memory and the neuron data memory with respect to use of the shared memory port. For example, the shared memory port may further comprise a memory arbiter configured to implement the memory arbitration scheme. Alternatively, the neuro-synaptic processing circuitry further comprises an additional component configured to implement the memory arbitration scheme.

Alternatively, according to further example embodiments, the neuro-synaptic processing circuitry further comprises a separate neuron memory port for loading the neuron states from the neuron data memory, and the NPE instructions further comprise a neuron load instruction for loading the neuron states from the neuron memory port to the NPEs.

According to further example embodiments, the NPE instructions further comprise a store instruction for storing the synaptic weights from the NPEs into the data memory, and the memory port is further configured to store the synaptic weights to the data memory.

According to further example embodiments, the data memory is configured to store the synaptic weights in a compressed format, and the compressed format is in accordance with a zero-suppression compression scheme to omit storing at least one of the one or more synaptic weights having a value of zero in the data memory.

A zero-suppression compression scheme is a data compression protocol, i.e. encoding scheme, wherein a series of bits is reduced by removing one or more zeros. The zero-suppression compression scheme may be a lossless compression scheme, to allow reconstruction of positions corresponding to the one or more zeros that were removed. Alternatively, the zero-suppression compression scheme may be a lossy compression scheme.

By already avoiding storage of zero-weights, more needless operations can be avoided, resulting in a faster execution time as well as a reduced power usage. In addition, memory can be used more efficiently and less chip area may be needed for memory. This also reduces memory overhead in terms of number of loading and storing operations. Further, such an optimisation does not reduce a flexibility of the neuro-synaptic processing circuitry.

The controller may be configured to compress the synaptic weights before storing the synaptic weights in the data memory. Alternatively, compressing the synaptic weights may be performed outside of the neuro-synaptic processing circuitry. For example, the synaptic weights may be compressed off-line before loading the synaptic weights onto the neuro-synaptic processing circuitry. By performing the compression off-line, more time and computational resources can be saved during operation of the neuro-synaptic processing circuitry.

According to further example embodiments, the controller is further configured to compress the synaptic weights into the compressed format before storing the synaptic weights into the data memory.

According to further example embodiments, the controller is further configured to decompress the synaptic weights from the compressed format after loading the synaptic weights from the data memory.

According to further example embodiments, the data memory is further configured to collectively store one or more of the synaptic weights as a vector; and the compressed format of each vector comprises a pair of: a compressed weight vector comprising non-zero synaptic weights, and, a decoding vector comprising information on how to decompress the compressed weight vector.

The synaptic weights may be stored in various ways. By storing multiple synaptic weights as a vector, multiple synaptic weights can be collectively handled and processed using one or more vector operations. Each vector of synaptic weights, including zero-weights and non-zero weights, is compressed into a compressed weight vector, including non-zero weights, along with a decoding vector. Since the compression scheme is lossless, the decoding vector allows retrieving all the zero-weights.

According to further example embodiments, the data memory comprises one or more first memory banks configured to comprise the one or more compressed weight vectors and one or more second memory banks configured to comprise the one or more corresponding decoding vectors.

By separating the storage of the compressed weight vectors from the deciding vectors, parallel handling can be easily performed, thereby saving time.

According to further example embodiments, the zero-suppression compression scheme comprises run-length encoding, RLE.

RLE is a lossless data compression scheme, wherein a compressed format of a vector comprises a pair of a RLE compressed weight vector comprising non-zero synaptic weights and a RLE decoding vector. To obtain the RLE compressed weight vector, zeros in the original vector are removed, thereby keeping only non-zero weights. The corresponding RLE decoding vector indicates a number of zeros between each of the remaining non-zero weights.

According to further example embodiments, the decoding vector comprises run-length indices.

A run-length index between two non-zero weights is a number that reflects how many zeros were present in an original vector between the two non-zero weights.

According to further example embodiments, one or more of the run-length indices have a dynamically configurable run-length.

The run-length is a number of bits to represent a number of zeros between non-zero weights. A dynamically configurable run-length is a run-length that can be adapted during run-time, i.e. operation, of the neuro-synaptic processing circuitry. If the data to be stored in the data memory comprises a high number, e.g. 10, of consecutive zeros, a short run-length, e.g. of 2 bits i.e. allowing representation of up to 4 zeros, may not suffice to represent all zeros. As such, the data memory may still comprise one or more synaptic weights having a value of zero. By allowing a dynamic configuration of the run-length, the run-length can be optimised as a function of the data in the data memory. The controller may, for example, be configured to dynamically configure the run-length. The controller may, for example, be configured to configure the run-length based on a number of consecutive zeros in the synaptic weights.

According to further example embodiments, the zero-suppression compression scheme further comprises coordinate-based compression, CC.

Coordinate-based compression is lossless data compression, wherein a compressed format of a vector comprises a pair of a CC compressed weight vector comprising non-zero synaptic weights and a CC decoding vector. To obtain the CC compressed weight vector, zeros in the original vector are removed, thereby keeping only non-zero weights. The corresponding CC decoding vector indicates indices of positions of the non-zero weights within the CC compressed weight vector in the original vector. This allows reconstructing the positions of the zero-weights and thereby of the original vector.

For example, the zero-suppression compression scheme may comprise a compressed sparse-row, CSR, compression, also referred to as compressed row storage. In CSR, a matrix comprising non-zero and zero values is compressed into a value CSR vector comprising only non-zero values. Such a value CSR vector is accompanied by a column CSR vector and a row CSR vector. The column CSR vector indicates, for each non-zero value in the value CSR vector respectively, a column index within the original matrix. The row CSR vector comprises, at least for each row of the matrix, a row index that indicates where said row starts. Such a row index is expressed as an index over the value CSR vector. By combining indices provided in the column CSR vector and the row CSR vector, an original matrix can be recovered including the zero-values. CSR comprises coordinate-based compression, since it stores column indices of non-zero elements. CSR compression can also be interpreted as comprising run-length encoding, since the row index is obtained by considering a relative index with respect to the value CSR vector.

According to further example embodiments, each compressed weight vector is divided into sections of N weights, wherein the sections are equally long, and N is less than or equal to a maximal number of weights that can be processed at once by each of the NPEs of the neuro-synaptic processing circuitry; and each NPE is further configured to process at least one of the sections.

By dividing the compressed weight vector into sections compatible with a capacity of the NPEs, an efficient operation, i.e. execution of NPE instructions, can be performed.

According to further example embodiments, the data memory further comprises, for each section of the sections, an absolute index corresponding to a first synaptic weight of that section; the absolute index is a coordinate of the coordinate-based compression; and the absolute index indicates a position of the corresponding synaptic weight within the uncompressed vector.

The absolute index is a coordinate index, i.e. in accordance with a coordinate-based compression. By using the absolute index, the sections can be handled separately and thus optionally in parallel.

According to further example embodiments, each corresponding decoding vector is divided into sections corresponding to the sections of the corresponding compressed weight vector to allow parallel fetching from the one or more first memory banks and the one or more second memory banks.

According to a second aspect of the present disclosure, there is provided a neuro-synaptic multicore processing circuitry comprising a plurality of neuro-synaptic processing circuitries according to the first aspect. Such a neuro-synaptic multicore processing circuitry may provide one or more of the above-mentioned advantages.

### Brief Description of the Drawings

Fig. 1 illustrates a neuro-synaptic processing circuitry according to example embodiments;
Fig. 2 illustrates a neuro-synaptic processing circuitry, wherein a data memory comprises a memory port, according to example embodiments;
Fig. 3 illustrates a neuro-synaptic processing circuitry, comprising a synaptic weight data memory and a separate neuron data memory, according to example embodiments;
Fig. 4 illustrates a neuro-synaptic multicore processing circuitry according to example embodiments;
Fig. 5 illustrates a zero-suppression compression scheme according to example embodiments; and
Fig. 6 illustrates a zero-suppression compression scheme according to example embodiments.

### Detailed Description of Embodiment(s)

The present disclosure relates to neuromorphic processing, i.e. performing neuro-synaptic operations according to an artificial neural network, ANN, also referred to as a neural network, NN, ANN model or NN model. A NN is a machine learning, ML, concept in the domain of artificial intelligence, AI. In particular, a neural network comprises a mathematical model that can be accommodated to perform a specific task. For example, in the domain of image processing, such a task may be image segmentation or image classification. For example, in the domain of digital audio, such a task may be speech recognition or speech-to-text conversion. Many other tasks may be solved by a NN, such as, for example, automated surveillance or providing a medical diagnosis.

A neural network is configured to perform computations on input data to generate output data so as to perform a certain task. For example, an NN may have a functionality of a classifier that classifies a picture into a category of 'animal type'. The input data would then be a set of pixels of an image depicting an animal, and the corresponding output data would then be an animal category, e.g. `cat'.

Before a neural network can be used for calculations on new input data, the weights in the NN need to be tuned so as to solve the task at hand. The process of adjusting the weights for performing a specific task, i.e. before the NN can be actually used, is referred to as training. To this end, so-called training data is fed to the neural network. Training data usually comprises labelled training input-output data pairs. During training, the training output data is considered a 'ground truth', i.e. optimal, output for the corresponding training input data. As such, the training output data allows the NN to calculate how far off its generated output is from the labelled, i.e. desired, output. As such, the NN is in essence 'taught' how to generate outputs. This is usually performed in an iterative manner, wherein in each iteration, the weights are updated such that the NN is able to better perform the task, i.e. an error for the training data becomes smaller.

The process of using the NN after completion of the training phase, is referred to as inference. Inferencing new input data by the NN means applying new input data to the NN, for which no corresponding 'ground-truth' output data is available.

A neural network model comprises a set of neurons arranged in layers. The input layer is the first layer and performs computations on the input data and the output layer is the last layer, which generates the output data. Between the input layer and the output layer, one or more intermediate layers, also referred to as hidden layers, may be provided. Connections, also referred to as edges, synaptic edges, or synapses, are provided between neurons of different layers and optionally between neurons within a same layer. When all neurons of a layer are connected to all neurons of a subsequent layer, this is referred to as a fully-connected interconnection scheme. Each edge has a synaptic weight associated to it. A synaptic weight defines a connectivity between two neurons of subsequent layers by quantifying a synaptic edge connecting the two neurons.

A neuron is characterised by a neuron model comprising a mathematical function that defines how to provide an output data value based on data on the input edges of the neuron. Such a mathematical function may, for example, comprise an activation function to be executed on a linear combination of the data along the input edges of the neuron. The linear combination is a weighted version of a sum of the data along the input edges, i.e. data outputted by neurons of a previous layer, using the corresponding weights. The activation function is usually a non-linear function, e.g. a rectifier, ReLU, function, or a leaky ReLU function. A neuro-synaptic operation is an operation performed by a neuron of a neural network. Performing a neuro-synaptic operation by a neuron may also be referred to as so-called 'firing' of the neuron. A neuro-synaptic operation may, for example, comprise computing a linear combination of data inputs using synaptic weights and subsequently applying an activation function.

Different types of ANNs exist based on a way that neurons are interconnected, i.e. on how edges are provided, and based on a neuron model of the neurons. Examples of different types of ANNs include, but are not limited to: a convolutional neural network, CNN, a spike neural network, SNN, a feedforward neural network, FNN, and a recurrent neural network, RNN. An ANN may be a deep neural network, DNN, meaning of a high complexity, i.e. a having large number of neurons and/or edges and at least a few hidden layers.

During operation of a neural network, i.e. during training or during inference, a neuron may 'fire', i.e. perform one or more computations to provide a neuron output on one or more output edges. When a neuron fires, the corresponding neuron model is evaluated, thereby producing a neuron output. Thereafter, the neuron output is to be distributed to other neurons via the output edges for further calculations.

In a neural network, a neuron state of a neuron is a variable of the neuron that reflects its current computational state. For example, the neuron state may comprise an output calculated by the neuron, such as for example in a feedforward neural network, FNN. Additionally, the neuron state may further comprise information based on inputs processed in the past, i.e. the neuron may have a memory-retention capability, such as for example in a recurrent neural network, RNN.

A neuro-synaptic processor circuitry is configured to perform neuro-synaptic operations according to a neural network comprising a plurality of neurons and a plurality of synaptic edges. Such a processor is tailored to efficiently perform calculations for training of a neural network and/or calculations for inference by a neural network.

Edge computing refers to applications wherein computations are performed by a device 'at the edge', i.e. locally, e.g. in an automated factory or an autonomous car. At the edge thus means close to a data source that generates data. Contrary to edge computing, centralised computing, e.g. cloud computing, is performed by providing the data to a powerful centralised server where computations are performed. Such a centralised server may, for example, be part of a server farm. A centralised server is usually located at a relatively far distance from the data source and may, for example, be accessed via the Internet. Centralised data processing has certain drawbacks, including a communication overhead that may lead to an unacceptable latency. Privacy issues may also arise as a result from the communication to the centralised server. The high latency of a centralised computing scheme makes edge devices a preferred choice for real-time applications, i.e. applications having critical latency, i.e. delay, requirements.

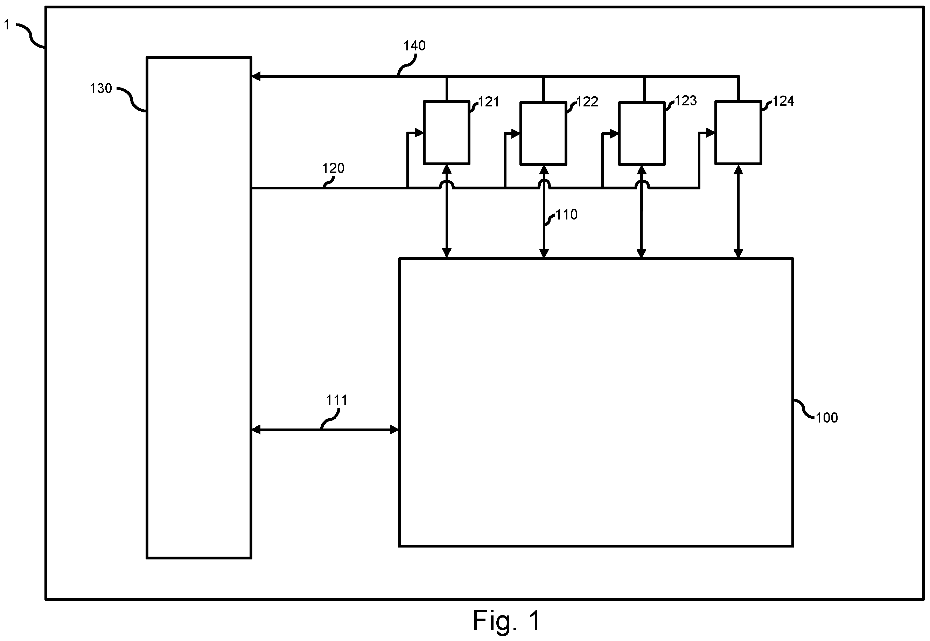

Figure 1 shows a neuro-synaptic processing circuitry 1 according to example embodiments.

The neuro-synaptic processing circuitry 1 is configured to perform event-based neuro-synaptic operations of a neural network, wherein synaptic weights correspond to synaptic edges in the neural network and wherein neurons states correspond to neurons in the neural network. Neuro-synaptic processing circuitry 1 may be referred to as neuro-synaptic processor 1, neuromorphic processor 1 or neuromorphic processor core 1.

Neuro-synaptic processor 1 comprises a data memory 100 configured to store synaptic weights. The data memory 100 is a digital storage means and may comprise any type of computer memory, e.g. static random access memory, SRAM, embedded dynamic random access memory, eDRAM, magneto-resistive random access memory, MRAM, resistive random access memory, RRAM, or ferro-electric field effect transistor, FeFET, memory. The data memory 100 may optionally also comprise other data additionally to the synaptic weights. For example, the data memory 100 may be further configured to comprise one or more of the following: neuron identifiers, neuron states, connections between neurons, and one or more neuron models. Data memory 100 may also be further configured to comprise other data.

Further, neuro-synaptic processor 1 comprises one or more neuron processing elements, NPEs, 121, 122, 123, 124. Each NPE is configurable to execute NPE instructions 120 for performing the event-based neuro-synaptic operations. A neuro-synaptic operation may comprise execution of one or more NPE instructions 120. An NPE instruction 120 is, for example, a task that is executable by an NPE 121, 122, 123, 124. An NPE 121, 122, 123, 124, also referred to as neural processing unit, NPU, is a processor having its own instruction set supporting neuro-synaptic operations. The instruction set comprises all possible NPE instructions 120 that an NPE is able to execute. The instruction set may be a single instruction, multiple data, SIMD, instruction set. Then, each active NPE 121-124 executes a same instruction in parallel and independently from one another. An active NPE is an NPE that is operating, i.e. activated, e.g. by the controller 130, to perform an NPE instruction 120. The NPE instructions 120 may, for example, comprise one or more arithmetic instructions, e.g. a summation or a multiplication. The NPE instructions 120 may, for example, comprise instructions for data transferral, e.g. a load instruction or a store instruction. An NPE 121, 122, 123, 124 is configured to execute a particular NPE instruction based on an opcode received as input. By receiving a certain opcode, the NPE 121, 122, 123, 124 is configured to execute an NPE instruction corresponding to said opcode. An opcode as such serves as a setting to configure the NPE 121, 122, 123, 124 as needed to perform some neuro-synaptic operation.

An NPE 121, 122, 123, 124 essentially operates like an arithmetic logic unit, ALU, but is tailored to support efficient performing of neuro-synaptic operations. An NPE 121, 122, 123, 124 comprises at least:
- an opcode input means for receiving an opcode for setting the NPE to perform a particular NPE instruction;
- one or more data input means for loading data, that is indicated by the NPE instruction, into the NPE;
- digital logic for performing a set of NPE instructions according to the instruction set; and
- a data output means for providing a result of the NPE instruction.
It will be apparent that, although four NPEs are illustrated throughout the drawings, the neuro-synaptic processor 1 may comprise any number of NPEs, e.g. 8 or 16 NPEs.

Each NPE 121-124 may, for example, be configured to process 8-bit data or 16-bit data. In other words, a width of data registers within an NPE may be 16 bits.

Further, neuro-synaptic processor 1 comprises a controller 130, also referred to as a controller circuitry 130. The controller 130 is configured to determine the event-based neuro-synaptic operations in function of one or more neuro-synaptic events. The controller 130 is further configured to generate the NPE instructions 120 from the event-based neuro-synaptic operations. Thus, the controller 130 determines which neuro-synaptic operations need to be performed to operate according to one or more neural networks. In addition, the controller 130 converts the determined neuro-synaptic operations into NPE instructions that can be provided to the NPEs 121-124. As such, the controller may manage the NPEs. This managing may be performed in a direct way, i.e. by directly providing by the controller 130 the NPE instructions 120 to the NPEs. Alternatively, the controller 130 may manage the NPEs in an indirect way, i.e. by providing the NPE instructions 120 to an intermediate sub-circuitry that is configured to provide the NPE instructions 120 to the NPEs 121-124.

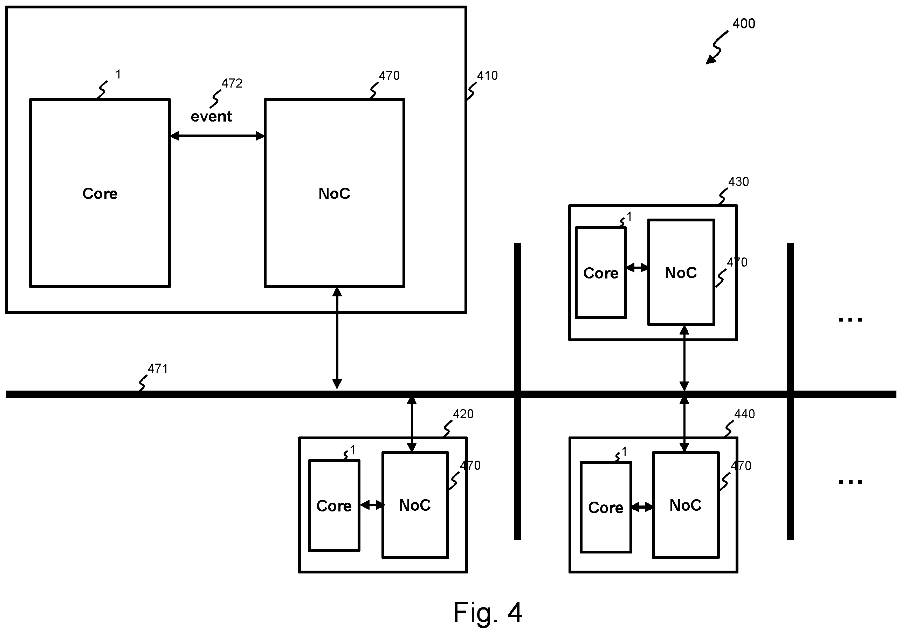

Determining the neuro-synaptic operations is performed in an event-driven manner, i.e. the controller 130 takes into account incoming events 140, 472 to determine the neuro-synaptic operations. In other words, the neuro-synaptic operations are based on incoming events 140, 472. To this end, the controller 130 is configured to receive events 140 generated by any one of the NPEs 121, 122, 123, 124 of the neuro-synaptic processor 1. Such an event 140 may also be referred to as an internal event 140. Additionally, the controller 130 may optionally be configured to receive events 472 generated by a connected NPE comprised in a connected neuro-synaptic processor 4, see Fig. 4 which is discussed below. Such an event 472 may also be referred to as an external event 472.

Further, neuro-synaptic processor 1 comprises weight-evaluating means. The weight-evaluating means are configured to determine if one or more of the synaptic weights have a value of zero. The weight evaluation, i.e. check for zero weights, allows detecting needless NPE instructions. By checking the weights before calculations are performed in the NPEs 121-124, needless calculations can be prevented. The weight-evaluating means may, for example, comprise the controller 130, the NPEs 121-124, or a designated weight-evaluating sub-circuitry (not shown in the drawings). For example, one or more of the NPEs 121-124 may be configured to determine if one or more of the synaptic weights have a value of zero. For example, each NPE 121-124 may be configured to perform a check for synaptic weights having a value of zero before executing an NPE instruction. Alternatively, one or more of the NPEs 121-124 may be configured to perform a check for synaptic weights having a value of zero before any of the other NPEs execute an NPE instruction. Alternatively, or additionally, the controller 130 may be configured to determine if one or more of the synaptic weights have a value of zero.

If the weight-evaluating means determines one or more of the synaptic weights having a value of zero, the NPEs 121-124 are configured to omit executing one or more of the NPE instructions involving the one or more of the synaptic weights having a value of zero. For example, the NPEs 121-124 may be configured to discard, i.e. skip, an instruction upon receiving a zero-weight control signal, i.e. a control signal indicating that the instruction involves a zero synaptic weight. Such a control signal may, for example, be received from the controller 130, from a weight-evaluating sub-circuitry or from another NPE. Alternatively, a non-zero-weight control signal may be used to indicate that an NPE121-124 may proceed with execution of an instruction since it does not involve zero weights. Alternatively, if the NPE has detected the zero-weight itself, the NPE may omit the execution right after performing the detection.

When an instruction involves a zero synaptic weight, a result of the instruction is known beforehand. Such an instruction may therefore comprise a needless operation. For example, if the NPE instruction pertains to a multiplication, it is known beforehand that the result will be zero. For example, if the NPE instruction pertains to an addition of two synaptic weights, it is known beforehand that the result will simply be equal to the other synaptic weight. By avoiding performing such unnecessary calculations, the neuro-synaptic processor 1 is able to save computational resources, i.e. the NPEs, during operation.

One example way to achieve the omission of NPE instructions involving zero-weights is for the data memory 100 to be configured to store synaptic weights in a compressed format, wherein the compressed format is in accordance with a zero-suppression compression scheme to omit storing synaptic weights having a value of zero in the data memory 100. Thus, the zero-weights can be intercepted before loading data 111 into the memory 100. This way has an additional advantage of saving data memory 100 resources as well.

To implement this, for example, the controller 130 may be configured to compress the synaptic weights into the compressed format before storing the synaptic weights into the data memory 100. Analogously, the controller 130 may further be configured to decompress the synaptic weights from the compressed format after loading the synaptic weights from the data memory 100.

Another example way to achieve the omission of NPE instructions 120 involving zero-weights is for the NPE instructions to further comprise a load instruction for loading the synaptic weights from the data memory into the NPEs 121-124; wherein, if the weight-evaluating means determines one or more of the synaptic weights having a value of zero, the NPEs 121-124 are further configured to omit loading at least one of the one or more synaptic weights having a value of zero from the data memory into the NPEs. Thus, the zero-weights can be intercepted at a time of loading data from the data memory 100 into the NPEs 121-124.

It is noted that multiple zero-weight omission techniques, e.g. storing the weights in a compressed format and intercepting the zero weights during loading, may be combined.

Thus, omitting of the loading of at least one of the one or more synaptic weights may be orchestrated by the controller 130, by one or more of the NPEs 121-124, and/or by any other part of the processor 1, e.g. by a designated evaluation sub-circuitry in communication with the NPEs 121-124.

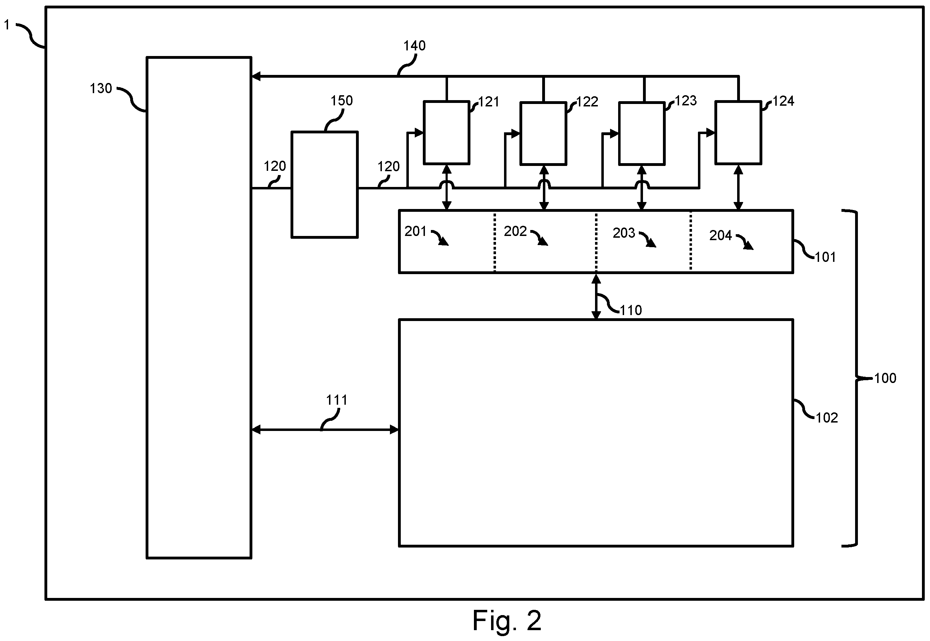

Figure 2 shows a neuro-synaptic processing circuitry 1 according to example embodiments. Similar to Figure 1, neuro-synaptic processor 1 of Figure 2 comprises a data memory 100 configured to store the synaptic weights; NPEs 121, 122, 123, 124 configurable to execute NPE instructions 120; a controller 130; and weight-evaluating means, which may comprise one or more of the NPEs 121-124, the controller 130 and/or other sub-circuitries.

It is noted that the same reference numerals throughout the figures indicate components fulfilling the same or a similar function.

The controller 130 may be further configured to execute program code to perform the event-based neuro-synaptic operations. The program code may, for example, comprise code describing a structure of a neural network, a neuron model, a training algorithm and/or code to perform inference. The controller 130 may be further configured to determine the NPE instructions 120 in function of the program code.

The controller 130 may further be configured to convert the program code into a micro-code. A micro-code is a low-level computer program. The neuro-synaptic processor 1 may further comprise a loop buffer 150 configured to store the micro-code. The micro-code may be loaded into the loop buffer 150 upon instruction of the controller 130. The micro-code may comprise one or more micro-code kernels, which can each be executed in one sequence. A micro-code kernel comprises NPE instructions 120. The controller 130 may further be configured to provide the micro-code including one or more micro-code kernels to the loop buffer 150. The loop buffer 150 is configured to manage execution of the micro-code by providing instructions 120 of a micro-code kernel to the NPEs 121-124. In other words, the loop buffer 150 may be configured to iteratively provide the NPE instructions 120 in a micro-code kernel to the NPEs 121-124.

Further, the data memory 100 may further comprise a memory port 101 and a data portion 102 where the synaptic weights are actually stored. The memory port 101 and the data portion 102 are configured to communicate 110. For example, the communication may allow loading the synaptic weights from the data memory 102. Further, the NPE instructions 120 may further comprise a store instruction for storing the synaptic weights from the NPEs 121-124 into the data memory, and the memory port 101 may be further configured to store the synaptic weights to the data memory 102. Optionally, the memory port 101 may further be configured to load the neuron states from the neuron data memory 100 into the NPEs 121-124 and/or for storing the neuron states from the NPEs 121-124 into the data memory 100.

The memory port 101 is connected to the NPEs 121-124 and provides an interface between the part 102 of the memory 100 that comprises the synaptic weights and the NPEs 121-124. Communication between the memory port 101 and the NPEs 121-124 may be two-way, thereby allowing both loading synaptic weights from the memory 102 into the NPEs 121-124 and storing of synaptic weights provided by the NPEs 121-124 into the memory 102. Storing of synaptic weights may comprise receiving, by the data memory 100, the synaptic weights from the NPEs 121-124 via the memory port 101 and updating the corresponding synaptic weight. Loading of synaptic weights may comprise receiving, by the NPEs 121-124, the synaptic weights from the data memory 102 via the memory port 101. After loading, a synaptic weight may, for example be stored in a local register in an NPE 121, 122, 123, 124.

The memory port 101 may be divided into a number of sections, 201, 202, 203, 204, the number of sections for example equal to the number of NPEs, i.e. 4 in this example embodiment. Correspondingly, each section may be large enough to contain one synaptic weight or one neuron state. As such, each NPE 121-124 may interact only with a respective section 201, 202, 203, 204 of the memory port 101. A section may, for example, have a capacity, i.e. width, of 4, 8 or 16 bits. This allows parallel loading and/or storing of synaptic weights and neuron states.

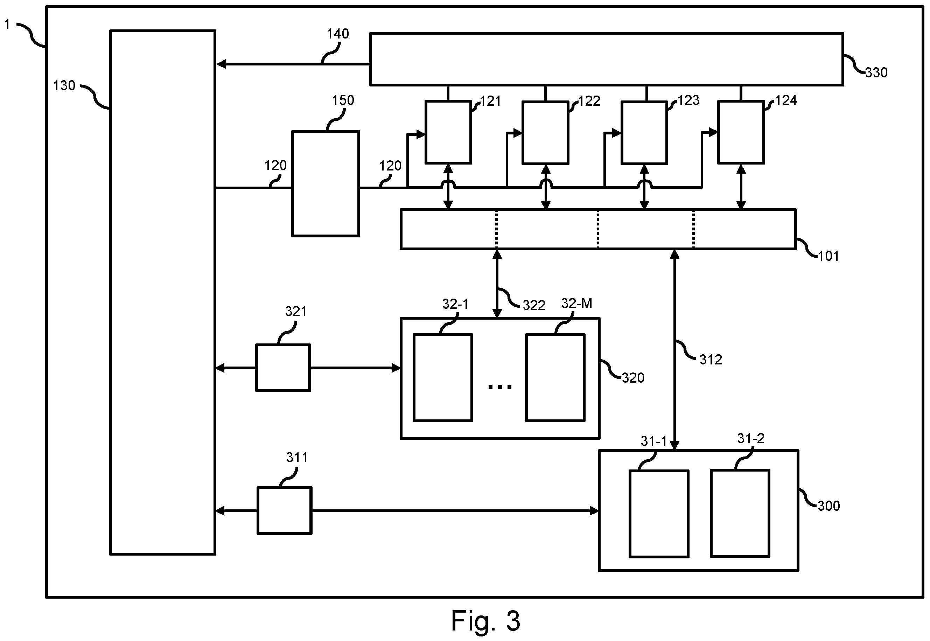

Figure 3 shows a neuro-synaptic processing circuitry 1 according to example embodiments. Similar to Figure 1, neuro-synaptic processor 1 of Figure 3 comprises a data memory 300 configured to store the synaptic weights; NPEs 121, 122, 123, 124 configurable to execute NPE instructions 120; a controller 130; a loop buffer 150; and weight-evaluating means, which may comprise one or more of the NPEs 121-124, the controller 130 and/or other sub-circuitries.

The neuro-synaptic processing circuitry 1 may further comprise a separate neuron data memory 320 configured to store the neuron states. As shown in Figure 3, the data memory 300 and the neuron data memory 320 may be configured to share the memory port 101 via connections 312, 322. The neuro-synaptic processing circuitry 1 may be further configured to implement a memory arbitration scheme between the data memory 300 and the neuron data memory 320 with respect to use of the shared memory port 101. Alternatively, the neuro-synaptic processing circuitry 1 may further comprise a separate neuron memory port for loading the neuron states from the neuron data memory 320, and the NPE instructions 120 further comprise a neuron load instruction for loading the neuron states from the neuron memory port to the NPEs 121-124. The neuron data memory 320 may comprise such a separate memory port, which would also be one-way or two-way connected to the NPEs 121-124.

The data memory 300 may comprise one or more first memory banks 31-1 configured to comprise one or more compressed weight vectors and one or more second memory banks 31-2 configured to comprise the one or more corresponding decoding vectors.

The neuron data memory 320 may comprise M memory banks 32-1 until 32-M, wherein M is a natural number larger than zero. The neuron states may as such be arranged for storage in said M memory banks, for example wherein each memory bank 32-1, 32-M represents a layer of a neural network.

The neuro-synaptic processor 1 may further comprise an event-generator circuitry 330, which may also be referred to as event-generator sub-circuitry 330. Such an event-generator circuitry 330 provides an interface between the NPEs 121-124 and the controller 130 for handling events. The event-generator circuitry 330 may be configured to capture events generated by any of the one or more NPEs 121-124 and the event-generator circuitry 330 may be further configured to provide the captured events 140 to the controller 130. The event-generator circuitry 330 may be configured to: monitor output data, i.e. a result of an NPE instruction, provided by the NPEs 121-124 and provide one or more events 140 to the controller 130 based on the output data provided by the NPEs 121-124.

Figure 4 shows a neuro-synaptic multicore processing circuitry 400 comprising a plurality of neuro-synaptic processing circuitries 410, 420, 430, 440, each comprising a neuro-synaptic processor core 1. Such neuro-synaptic processor cores 1 may, for example, be the neuro-synaptic processor 1 of Figure 1, Figure 2 or Figure 3.

The neuro-synaptic processing circuitry 410 may further comprise a communication interface 470. The communication interface 470 is configured to receive events 472 from other neuro-synaptic processing circuitries and/or configured to transmit events 472 to other neuro-synaptic processing circuitries, for example via a shared bus 471. Event 472 may, for example, be an event generated by a connected NPE comprised in a connected neuro-synaptic processing circuitry 420, 430, 440.

Similarly, neuro-synaptic processing circuitries 420, 430, 440 may comprise a respective communication interface 470.

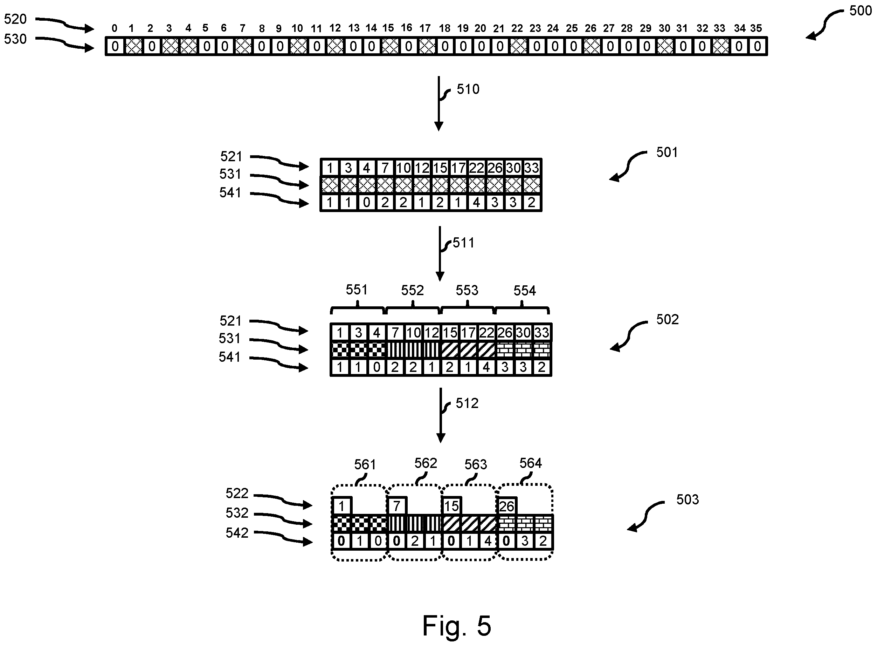

Figure 5 illustrates a zero-suppression compression scheme according to example embodiments to omit storing at least one of the one or more synaptic weights having a value of zero in the data memory 100, 102, 300.

Subplot 500 shows a vector 530 comprising one or more synaptic weights. The synaptic weights of vector 530 may have a non-zero value or may have a value of zero. In particular, vector 530 comprises 36 synaptic weights. Indices 520 from 0 to 35 respectively correspond to each of the synaptic weights, thereby allowing uniquely identifying each synaptic weight within vector 530. Index vector 520 comprises absolute indices. An absolute index indicates a position within the original vector 530 comprising both the non-zero weights and the zero-weights. An index may therefore be referred to as a pointer. Synaptic weights having a value of zero are indicated by '0' and non-zero weights are indicated by an outlined diamond grid pattern. In the example of Figure 5, the synaptic weights having an index of 0, 2, 5, 6, 8, 9, 11, 13, 14, 16, 18, 19, 20, 21, 23, 24, 25, 27, 28, 29, 31, 32, 34, or 35 have a value of zero, while synaptic weights having an index of 1, 3, 4, 7, 10, 12, 15, 17, 22, 26, 30, or 33 have a non-zero value. For simplicity, the non-zero values are not further specified. The synaptic weights of vector 530 may, for example, be 4-bit or 8-bit integers.

According to the zero-suppression compression scheme, one or more of the zero-valued synaptic weights may be removed during compression. Such a compression may, for example, be performed by the controller 130. This is illustrated by compression 510, wherein a compressed format of vector 530 comprises a pair of a compressed weight vector 531 and a decoding vector 541. The compressed weight vector 531 comprises the non-zero synaptic weights, i.e. excluding one or more of the zero-weights. As a result, the compressed weight vector 531 is shorter than the original vector 530 and requires less bits to be represented. The decoding vector 541 comprises information on how to decompress the compressed weight vector.

The compression 510 may, for example, comprise run-length encoding, RLE. This is illustrated in subplot 501. In that case, the decoding vector 541 may comprise run-length indices. A run-length index reflects, for each non-zero value, how many zeros precede said non-zero value. The amount of preceding zeros may be defined with respect to the previous non-zero value of the original vector 530 or, in case of the first non-zero value, with respect to the beginning of the original vector 530. For example, the first run-length index '1' of decoding vector 541 reflects that for the non-zero value having absolute index '1', one zero was present before said non-zero value. Similarly, the second run-length index '1' of decoding vector 541 reflects that for the non-zero value having absolute index `3', one zero was present between said non-zero value and the previous non-zero value of vector 530. In this case, the previous non-zero value is the non-zero value corresponding to absolute index 1.

Thus, the compressed format of vector 530 comprises a pair of a compressed weight vector 531 and a decoding vector 541. The compressed format of vector 530 may further comprise an absolute index vector 521 comprising the absolute indices corresponding to vector 531. Optionally, vectors 521 and 541 may be combined into a decoding vector, wherein the decoding vector comprises information on how to decompress the compressed weight vector. However, it will be apparent that vector 521 is not strictly necessary to decompress vector 531 back to obtain the original vector 530.

A run-length is a number of bits used to represent the run-length indices of vector 541. The run-length for the RLE compression of subplot 501 may, for example, be 3 bits. With 3 bits, run-length indices between 0 and 7 can be represented. If vector 530 comprises more than 7 consecutive zeros, the run-length of 7 would not allow compressing the superfluous zeros. Therefore, RLE may not guarantee removal of all zeros. This depends on the run-length, which is a design parameter. When setting the run-length to a low value, the decoding vector 541 may be shorter and thus require less memory resources. However, excessive zeros may still be stored in the memory 100, 102, 300. This may result in unneeded execution of NPE instructions. Nonetheless, omitting execution of all NPE instructions involving a zero-weight may be ensured by example embodiments that combine the zero-suppression compression scheme using RLE with an additional check performed by the NPEs before execution. Optionally, the run-length may be dynamically configurable. For example, the controller 130 may be configured to dynamically adapt the run-length.

The zero-suppression compression scheme may further comprise coordinate-based compression, CC, according to example embodiments. This is illustrated in subplots 502-505.

In subplot 502, the compressed weight vector 531 is divided 511 into sections 551, 552, 553, 554 of three weights, i.e. for example three weights of 4 bits, resulting in sections of 12 bits. The sections 551, 552, 553, 554 are equally long. Each NPE may be further configured to process one of sections 551-554. For example, during loading, the sections 551, 552, 553, 554 may be provided into respective portions of the memory port 101.

The absolute index vector 521 and the corresponding decoding vector 541 may also be correspondingly divided into sections. Subplot 503 illustrates how the sections 551-554 may be adapted to be further used separately, i.e. independently. Within each section 551-554, the first run-length index, i.e. corresponding to the first synaptic weight, may be set to zero. This is because the relation to previous synaptic weights will no longer be derivable after disconnecting the sections and processing them independently. Instead, the interrelations between the sections 551-554 may be captured by the absolute index of the first synaptic weight. By keeping the absolute index for each first synaptic weight within each section, the sections 551-554 can be combined again and the vector 530 may be reconstructed. Further, absolute indices of the remaining synaptic weights within a section are not needed, since the run-length index allows reconstructing the positions. Thus, for example, sections 551-664 may be converted 512 to and stored as data portions 561, 562, 563, 564 respectively. The absolute indices 1, 7, 15, 26 are coordinates according to a coordinate-based compression.

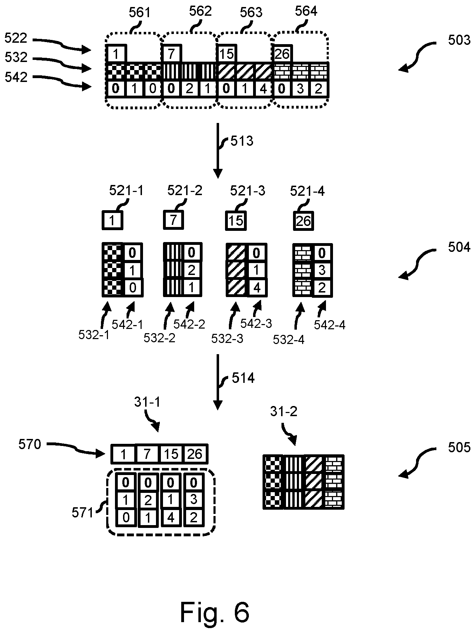

Figure 6 shows subplot 504, wherein the data portions 561-564 are further disassembled 513. Data portion 561 corresponding to section 551 comprises: absolute index 521-1, having a value of `1'; non-zero synaptic weights 532-1; and run-length indices 542-1. Analogously, data portion 562 corresponding to section 552 comprises: absolute index 521-2, having a value of '7'; non-zero synaptic weights 532-2; and run-length indices 542-2. Analogously, data portion 563 corresponding to section 553 comprises: absolute index 521-3, having a value of `15'; non-zero synaptic weights 532-3; and run-length indices 542-3. Analogously, data portion 564 corresponding to section 554 comprises: absolute index 521-4, having a value of `26'; non-zero synaptic weights 532-4; and run-length indices 542-4.

The data portions 561-564 may be further rearranged 514 into a format that may be convenient for storage, as shown in subplot 505.

The decoding information 521-1 until 521-4 and 542-1 until 542-4 is combined 514 into decoding matrix 31-1. Decoding matrix 31-1 comprises the absolute indices 521-1 until 521-4 of the first synaptic weights of the sections 551-554, for example in a first row 570 of the decoding matrix 31-1. Decoding matrix 31-1 further comprises a submatrix 571 underneath the first row 570. The submatrix 571 comprises the run-length indices 542-1 until 542-4 respectively arranged as columns. As a result, each column of the decoding matrix 31-1 pertains to one of the sections 551-554. The synaptic weights 532-1 until 532-4 are also correspondingly combined 514 into a corresponding synaptic weight matrix 31-2. For example, the synaptic weights are arranged as columns according to the sections 551-554.

It is noted that other matrix arrangements may also be possible. For example, matrices 31-1, 31-2 may be transposed, such that each section pertains to a row instead of a column.

The data memory 100, 102, 300 may be further configured to collectively store one or more of the synaptic weights as vector 530 or as any of the intermediate representations illustrated throughout Figure 5 and Figure 6. For example, after arranging 514 the data as illustrated in subplot 505, decoding matrix 31-1 may be stored in first memory bank 31-1 and synaptic weight matrix 31-2 may be stored in second memory bank 31-2. As a result, parallel fetching can be performed from the first memory bank and the second memory bank.

As used in this application, the term "circuitry" may refer to one or more or all of the following: (a) hardware-only circuit implementations (such as implementations in only analog and/or digital circuitry); and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A neuro-synaptic processing circuitry (1) for performing event-based neuro-synaptic operations based on synaptic weights and neuron states, the circuitry comprising:
- a data memory (100) configured to store the synaptic weights;
- one or more neuron processing elements, NPEs, (121, 122, 123, 124) configurable to execute NPE instructions (120) for performing the event-based neuro-synaptic operations;
- a controller (130) configured to determine the event-based neuro-synaptic operations in function of one or more neuro-synaptic events; wherein the controller is further configured to generate the NPE instructions from the event-based neuro-synaptic operations; and
- weight-evaluating means configured to determine if one or more of the synaptic weights have a value of zero; and
wherein, if the weight-evaluating means determines one or more of the synaptic weights having a value of zero, the NPEs are configured to omit executing one or more of the NPE instructions involving the one or more of the synaptic weights having a value of zero.

2. The neuro-synaptic processing circuitry of claim 1, wherein the NPE instructions further comprise a load instruction for loading the synaptic weights from the data memory into the NPEs; and wherein, if the weight-evaluating means determines one or more of the synaptic weights having a value of zero, the NPEs are further configured to omit loading at least one of the one or more synaptic weights having a value of zero from the data memory into the NPEs.

3. The neuro-synaptic processing circuitry of any of claims 1 or 2, further comprising a separate neuron data memory (320) configured to store the neuron states.

4. The neuro-synaptic processing circuitry of claims 2 and 3, wherein the data memory further comprises a memory port (101) for loading (110) the synaptic weights from the data memory; wherein the memory port is further configured to load the neuron states from the neuron data memory into the NPEs; and wherein the data memory and the neuron data memory are configured to share the memory port.

5. The neuro-synaptic processing circuitry according to any one of the preceding claims, wherein the data memory is configured to store the synaptic weights in a compressed format, and wherein the compressed format is in accordance with a zero-suppression compression scheme to omit storing at least one of the one or more synaptic weights having a value of zero in the data memory.

6. The neuro-synaptic processing circuitry according to claim 5, wherein the controller is further configured to compress the synaptic weights into the compressed format before storing the synaptic weights into the data memory.

7. The neuro-synaptic processing circuitry according to claim 5 or 6, wherein the data memory is further configured to collectively store one or more of the synaptic weights as a vector (500); and wherein the compressed format of each vector comprises a pair of a compressed weight vector comprising non-zero synaptic weights and a decoding vector comprising information on how to decompress the compressed weight vector.

8. The neuro-synaptic processing circuitry according to claim 7, wherein the data memory comprises one or more first memory banks (31-1) configured to comprise the one or more compressed weight vectors and one or more second memory banks (31-2) configured to comprise the one or more corresponding decoding vectors.

9. The neuro-synaptic processing circuitry according to any one of claims 5-8, wherein the zero-suppression compression scheme comprises run-length encoding, RLE.

10. The neuro-synaptic processing circuitry according to claim 9, wherein the decoding vector comprises run-length indices.

11. The neuro-synaptic processing circuitry according to any one of claims 5-10, wherein the zero-suppression compression scheme further comprises coordinate-based compression.

12. The neuro-synaptic processing circuitry according to claim 10, wherein one or more of the run-length indices have a dynamically configurable run-length.

13. The neuro-synaptic processing circuitry according to any of claims 7-12 as long as dependent on claim 7, wherein each compressed weight vector is divided into sections of N weights, wherein the sections are equally long, and wherein N is less than or equal to a maximal number of weights that can be processed at once by each of the NPEs of the neuro-synaptic processing circuitry; and wherein each NPE is further configured to process at least one of the sections.

14. The neuro-synaptic processing circuitry according to claims 11 and 13, wherein the data memory further comprises, for each section of the sections, an absolute index corresponding to a first synaptic weight of that section; wherein the absolute index is a coordinate of the coordinate-based compression; and wherein the absolute index indicates a position of the corresponding synaptic weight within the uncompressed vector.

15. The neuro-synaptic processing circuitry according to claims 8 and 13, wherein each corresponding decoding vector is divided into sections corresponding to the sections of the corresponding compressed weight vector to allow parallel fetching from the one or more first memory banks and the one or more second memory banks.

16. A neuro-synaptic multicore processing circuitry comprising a plurality of neuro-synaptic processing circuitries according to any one of the preceding claims.
